# FASCICULE DE BREVET EUROPEEN

(11) **EP 2 475 493 B1**
(45) Date de publication et mention de la délivrance du brevet: **13.05.2015**
(21) Numéro de dépôt: 10751654.4
(22) Date de dépôt: 03.09.2010
(51) Int. Cl.: B23K 20/02, F28F 3/12

(54) **PROCEDE DE FABRICATION D'UN MODULE A ZONE CREUSE, DE PREFERENCE POUR LA CIRCULATION DE FLUIDE**
METHOD FOR MANUFACTURING A MODULE HAVING A HOLLOW SPACE, IN PARTICULAR FOR THE CIRCULATION OF A FLUID
VERFAHREN ZUR HERSTELLUNG EINES MODULS MIT EINEM HOHLRAUM, INSBESONDERE FÜR EINEN FLÜSSIGKEITKREISLAUF

(30) Priorité: 07.09.2009 FR 0956066
(43) Date de publication de la demande: 18.07.2012
(73) Titulaire: Commissariat à l'Énergie Atomique et aux Énergies Alternatives, 75015 Paris (FR)
(72) Inventeur: RIGAL, Emmanuel, F-38950 St Martin le Vinoux (FR); BUCCI, Philippe, F-38360 Engins (FR)
(74) Mandataire: Ilgart, Jean-Christophe
(86) Numéro de dépôt international: PCT/EP2010/062921
(87) Numéro de publication internationale: WO 2011/026925

(56) Documents cités:
- FR-A1- 2 879 489
- GB-A- 2 269 556
- JP-A- 2008 039 255
- US-A- 4 677 724

## Description

L'invention se rapporte de façon générale au domaine de la fabrication, par soudage par diffusion mis en ouvre par compression isostatique à chaud, de modules à zone creuse, comme connue du document JP-A-2008039255.

En particulier, l'invention se rapporte à la fabrication de modules dont la zone creuse prend la forme d'un ou d'une pluralité de canaux, de préférence destinés à la circulation de fluide.

De nombreuses applications sont envisageables pour ce module, comme les échangeurs de chaleur, et préférentiellement les échangeurs dits compacts à plaque, pour lesquels les échanges thermiques obtenus sont très satisfaisants, en raison de l'important rapport entre les surfaces d'échange et le volume de l'échangeur. Par exemple, il peut s'agir d'un système d'échangeur thermique comprenant un module ou un empilement de modules formant en alternance, selon une direction d'empilement des plaques, une première zone de circulation fluidique et une seconde zone de circulation fluidique, et conçus de manière à ce qu'il se produise une réaction chimique, éventuellement catalytique, dans au moins l'une de ces zones de circulation fluidique. Ainsi, en raison de la réaction chimique rencontrée au sein d'au moins l'une de ces zones, de tels échangeurs sont également appelés réacteurs. De manière plus générale, de tels échangeurs de chaleur sont dénommés échangeurs/réacteurs.

Il est noté que plusieurs utilisations peuvent être envisagées pour ce type de système d'échangeur, par exemple la production de produits chimiques ou pharmaceutiques, ou bien encore les installations de pile à combustible.

D'autres applications sont également envisageables pour le module creux, dans les appareils à pression refroidis, les absorbeurs thermiques, les récupérateurs de chaleur, et, de façon plus générale, dans tous les dispositifs comportant des canaux internes de circulation de fluide.

### ETAT DE LA TECHNIQUE ANTERIEURE

De l'art antérieur (voir US-A-4677724), on connait la fabrication d'un module creux à partir de deux plaques rainurées, en appui l'une contre l'autre afin de définir conjointement des cavités dans lesquelles sont insérés des tubes dont la géométrie correspond à celle des canaux de circulation désirés. Dans ce cas de figure, les surfaces à assembler par diffusion sont tout d'abord nettoyées, les pièces empilées, puis la périphérie des deux plaques est rendue étanche par soudage ou en insérant les plaques dans une enveloppe rendue étanche par soudage. De même, la périphérie des extrémités des tubes est rendue étanche par soudage avec ces deux mêmes plaques ou avec l'enveloppe. Cette enveloppe est appelée conteneur.

Après un dégazage classique de l'ensemble ainsi formé, celui-ci est soumis à un cycle de compression isostatique à chaud, durant lequel le gaz de pressurisation ne peut pas pénétrer dans les interfaces entre les éléments de l'ensemble, ceux-ci pouvant alors se souder convenablement les uns aux autres, par diffusion. En revanche, le gaz de pressurisation pénètre à l'intérieur des tubes, de sorte qu'ils sont soumis à la même pression que celle des surfaces extérieures de l'ensemble. Il ne se produit de ce fait aucun écrasement des tubes, qui conservent leur géométrie initiale.

Néanmoins, dans certaines réalisations, la forme des canaux est telle qu'elle est irréalisable à partir de tubes, notamment lorsqu'elle comporte des coudes trop prononcés pour pouvoir être obtenus par cintrage de tubes droits.

A cet égard, il est noté que l'assemblage par soudage diffusion en compression isostatique à chaud de plaques rainurées, sans tubes interposés entre celles-ci, n'est possible qu'au prix d'une dégradation importante de la structure. En effet, si on ne bouche pas de façon étanche les entrées et sorties des canaux, le gaz de pressurisation pénètre entre les plaques rainurées et interdit leur soudage. A l'inverse, si on bouche de façon étanche les entrées et sorties des canaux, ceux-ci sont écrasés par la pression, ce qui conduit à une perte inacceptable de précision dimensionnelle des canaux, voire à une disparition de ces derniers. Dans un tel cas, une diminution de la pression engendrerait, certes, un plus faible écrasement des canaux, mais s'accompagnerait également d'une réduction de la résistance des jonctions soudées.

Une autre solution technique pour éviter l'écrasement des canaux consiste à remplir les rainures avec des noyaux réalisés dans un matériau susceptible d'être éliminé après l'assemblage, par dissolution chimique ou par un autre moyen, tel que cela est décrit dans le document JP-A-2006 263746. Cependant, dans la pratique, la définition du matériau de remplissage et son élimination s'avèrent très difficiles.

Encore un autre procédé de fabrication est connu du document FR-A-2 879 489. Il consiste à usiner des rainures préfigurant les canaux dans une plaque, à étanchéifier le sommet de ces rainures en y rapportant par soudage des lames minces, puis à assembler par soudage diffusion en compression isostatique à chaud, sur la plaque rainurée, un second élément en forme de couvercle recouvrant les lames minces. Cette solution présente plusieurs inconvénients, parmi lesquels un coût élevé, la difficulté de souder les lames minces lorsque les canaux ne sont pas droits, la difficulté de contrôler et garantir l'étanchéité de toutes les soudures des lames pour une structure comprenant de multiples canaux ou de grandes longueurs de canaux, ou encore l'impossibilité de construire des canaux avec une largeur de canal non régulière sur la hauteur du canal, dans l'optique de la formation de canaux dits « 3D ».

Enfin, un autre procédé de fabrication est connu du document intitulé *« HIP experiments on the first wall and cooling plate specimens for the EU HCPB blanket* », P. Norajitra et al., Journal of Nuclear Materials 307-311 (2002). Il y est décrit un principe consistant à assembler des pièces élémentaires, par soudage diffusion en compression isostatique à chaud, en deux étapes. Tout ou partie des pièces élémentaires permettent de reconstituer, en les juxtaposant, les canaux désirés. Ces pièces élémentaires sont insérées dans un conteneur étanche pour former un ensemble qui est ensuite dégazé puis obturé. Alternativement, la périphérie des pièces élémentaires est soudée de façon étanche, et les canaux obturés, toujours de manière à former une enveloppe étanche renfermant la zone creuse.

Lors de la première étape de soudage par diffusion, les conditions de température et de pression de la compression isostatique à chaud, ainsi que la durée de l'étape, sont normalement prévues d'une part de manière à obtenir un soudage des pièces rendant leurs interfaces étanches, et d'autre part de sorte que les éventuelles déformations des canaux restent négligeables.

Après cette première étape, l'ensemble est percé en regard des canaux, de préférence orthogonalement à l'empilement, de façon à y laisser pénétrer l'air. L'étanchéité de la zone creuse est alors rompue. Il s'ensuit une seconde étape de soudage par diffusion, réalisée à plus forte pression de façon à garantir l'obtention d'un soudage diffusion de bonne qualité entre les pièces élémentaires. Durant cette deuxième étape, le gaz de pressurisation pénètre dans les canaux, contrairement à la première étape de soudage, ce qui permet d'éviter l'écrasement des canaux, et de leur faire conserver une géométrie acceptable.

Cette solution présente un inconvénient majeur qui est que le compromis à adopter pour les conditions de température et de pression de la compression isostatique à chaud, afin d'assurer le soudage aux interfaces sans altérer trop sévèrement la forme des canaux, s'avère souvent impossible à trouver. En effet, il a été constaté que dans bon nombre de cas, la pression nécessaire à l'obtention d'une étanchéité satisfaisante aux interfaces engendre un écrasement des canaux, alors que, parallèlement, la pression maximale n'engendrant qu'une déformation négligeable des canaux n'est pas suffisante pour obtenir une étanchéité satisfaisante aux interfaces.

Enfin, il est connu du document JP-A-2008039255 d'obtenir l'étanchéité par l'application d'un cordon de brasure, et brasage de l'ensemble.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un procédé de fabrication d'un module à zone creuse comprenant :
- une étape de réalisation d'un ensemble comprenant des plaques superposées selon une direction d'empilement et définissant la zone creuse, parmi lesquels au moins une plaque évidée présentant un évidement formant tout ou partie de la zone creuse et débouchant au niveau d'au moins l'une de ses faces en définissant sur celle-ci un contour d'évidement, ledit ensemble comportant, entre chaque face définissant un contour d'évidement et la plaque de l'ensemble directement consécutive dans la direction d'empilement, un cordon de matière suivant ledit contour d'évidement ;
- une étape de traitement de l'ensemble visant à obtenir un soudage par diffusion de chaque cordon de matière sur les plaques de l'ensemble qu'il contacte, afin qu'il constitue, le long de son contour d'évidement associé, une liaison étanche des deux plaques entre lesquelles il est agencé ; et
- une étape de consolidation de l'ensemble par compression isostatique à chaud, réalisée de manière à obtenir un soudage par diffusion de ses éléments, ladite étape de consolidation étant mise en oeuvre en permettant au gaz de pressurisation de pénétrer dans ladite zone creuse.

L'originalité de l'invention réside dans l'implantation du cordon de matière, qui, durant l'étape de traitement, fait l'objet d'une déformation plastique importante favorisant le soudage par diffusion. Cela s'explique par le fait que sa section dans un plan orthogonal à la direction d'empilement est largement inférieure à celle de la partie en relief de la plaque évidée, de sorte que la contrainte d'écrasement qu'il subit est très supérieure.

Par conséquent, pour cette étape de traitement, il est aisé de trouver une pression qui soit suffisante pour que le cordon de matière se soude par diffusion sur les plaques de l'ensemble qu'il contacte, en assurant ainsi une liaison étanche des deux plaques entre lesquelles il est agencé, sans pour autant provoquer de déformation de ces plaques. Avantageusement, le soudage aux interfaces est donc obtenu, et la géométrie de la zone creuse conservée. A cet égard, il est noté que l'étape traitement est préférentiellement mise en oeuvre par compression isostatique à chaud, même si toute autre technique de soudage par diffusion peut être employée, comme par exemple l'utilisation d'une presse uniaxiale, d'une masse, ou encore d'un système de bridage.

Lorsque la technique de compression isostatique à chaud est employée pour l'étape de traitement, le gaz de pressurisation est interdit de pénétrer dans la zone creuse, afin d'éviter de perturber le soudage au niveau des surfaces de contact du cordon.

Comme mentionné ci-dessus, le soudage par diffusion observé durant cette étape de traitement est suffisant pour obtenir l'étanchéité au niveau du cordon de matière, mais présente une résistance mécanique faible, prévue pour être consolidée par la mise en oeuvre de l'étape ultérieure de consolidation. Avant l'initiation de cette étape, il est fait en sorte que le gaz de pressurisation puisse pénétrer dans la zone creuse, de préférence en perçant l'une et/ou l'autre des plaques superposées mentionnées précédemment. Cela permet d'appliquer une pression très élevée, propice à l'obtention d'une résistance mécanique forte au niveau des interfaces soudées par diffusion, sans provoquer l'écrasement de la zone creuse qui peut ainsi conserver la géométrie désirée. Cela s'explique par le fait que l'intérieur de la zone creuse est soumis à la même pression que celle s'appliquant sur les surfaces extérieures de l'ensemble subissant la compression.

En outre, l'invention permet une grande liberté de forme de la zone creuse, prenant de préférence la forme de canaux, notamment si ceux-ci sont réalisés par découpe laser dans une plaque. La forme complexe des canaux obtenus, par exemple des canaux « 3D », conduit avantageusement à l'obtention d'un module compact et très performant thermiquement lorsqu'il est utilisé au sein d'un échangeur, et très performant en mélange de réactifs chimiques lorsqu'il est utilisé au sein d'un échangeur/réacteur.

Enfin, il ne nécessite pas de brasure pour assembler les éléments, donc ne présente pas de problèmes en cas d'utilisation de fluides corrosifs.

De préférence, chaque cordon de matière est prévu d'un seul tenant avec sa plaque évidée associée, ou rapporté dans l'ensemble en tant qu'insert. Dans ce dernier cas, durant l'étape de traitement, le cordon se soude par diffusion aux deux plaques entre lesquelles il est interposé, assurant l'étanchéité entre celles-ci.

De préférence, au moins une plaque évidée de l'ensemble présente un évidement formant tout ou partie de la zone creuse et débouchant seulement au niveau de l'une de ses faces en définissant sur celle-ci un contour d'évidement. Il est alors prévu que le cordon de matière associé à la plaque évidée définissant un évidement débouchant seulement au niveau de l'une de ses faces, coopère avec une plaque pleine ou avec une autre plaque évidée de l'ensemble. La plaque pleine remplit la fonction de fermeture de la zone creuse, tandis que la plaque évidée la complète. Dans ce dernier cas, les deux contours d'évidement, respectivement prévues sur les deux faces en regard des deux plaques évidées, sont préférentiellement identiques ou similaires.

Alternativement ou simultanément, il est possible de prévoir qu'au moins une plaque évidée de l'ensemble présente un évidement formant tout ou partie de la zone creuse et débouchant au niveau de ses deux faces opposées, cet évidement traversant définissant sur chacune des deux faces opposées de la plaque un contour d'évidement. Il est alors prévu que chacun des deux cordons de matière associés à la plaque évidée définissant un évidement traversant, coopère avec une plaque pleine ou avec une autre plaque évidée de l'ensemble. Ici encore, dans ce dernier cas, les deux contours d'évidement, respectivement prévus sur les deux faces en regard des deux plaques évidées, sont préférentiellement identiques ou similaires.

Naturellement, l'ensemble peut comporter un empilement de plaques selon l'une des solutions décrites ci-dessus, ou bien selon une combinaison de ces solutions.

Comme évoqué ci-dessus, ladite étape de traitement de l'ensemble est également réalisée par compression isostatique à chaud, à une pression inférieure à celle mise en oeuvre pour ladite étape de consolidation.

De préférence, l'ensemble est réalisé de telle sorte qu'avant son étape de traitement, en projection orthogonale selon la direction d'empilement, la surface de la face de la plaque présentant l'évidement est au moins N fois supérieure à la surface de son cordon de matière associé, N étant supérieur à 1,5, et de préférence supérieur à 3. Encore plus préférentiellement, N est supérieur à 4.

La contrainte de compression étant inversement proportionnelle à la section de matière dans le plan orthogonal à la direction d'empilement, la valeur élevée de N favorise la déformation du cordon de matière plutôt que celle de la partie en relief de la plaque évidée, qui se termine par la face de plaque précitée. Cela permet l'obtention d'une bonne étanchéité au niveau du cordon de matière déformé plastiquement, tout en maintenant l'intégrité et la géométrie des plaques.

De préférence, ledit ensemble comporte également, entre chaque face de plaque évidée définissant un contour d'évidement, et la plaque de l'ensemble directement consécutive dans la direction d'empilement, un cordon périphérique de matière suivant la périphérie de ces deux plaques, l'étape ultérieure de traitement de l'ensemble visant également à obtenir un soudage par diffusion de chaque cordon périphérique de matière sur les plaques de l'ensemble qu'il contacte, afin qu'il constitue, le long de la périphérie de celles-ci, une liaison étanche des deux plaques entre lesquelles il est agencé.

Une alternative serait de souder les plaques entre elles à leur périphérie, avant l'étape de traitement, par exemple par soudage TIG.

De préférence, ladite zone creuse prend la forme d'un ou d'une pluralité de canaux de circulation de fluide.

De préférence, ledit module est prévu pour équiper un système d'échangeur de chaleur, même si toutes les applications mentionnées ci-dessus sont envisageables, sans sortir du cadre de l'invention.

De préférence, ledit module prend la forme d'une plaque, de même que la plupart des éléments constitutifs de l'ensemble.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique en perspective d'un module de circulation fluidique obtenu suite à la mise en oeuvre du procédé selon un mode de réalisation préféré de la présente invention ;
- la figure 2 représente une vue éclatée en perspective de l'ensemble destiné à former ledit module de la figure 1, avant son traitement ;
- la figure 3 représente une vue non-éclatée en perspective d'une partie de l'ensemble montré sur la figure 2 ;
- la figure 4 représente une vue en perspective d'une partie de l'ensemble coupée selon le plan P de la figure 2 ;
- la figure 5 représente une vue analogue à celle de la figure 3, l'ensemble se présentant sous la forme d'une alternative de réalisation ;
- la figure 6 représente une vue en coupe de l'ensemble se présentant sous la forme d'une autre alternative de réalisation ;
- la figure 7 représente une vue analogue à celle de la figure 6, l'ensemble se présentant sous la forme d'une autre alternative de réalisation ; et
- la figure 8 représente une plaque évidée faisant partie intégrante de l'ensemble montré sur la figure 7.

### EXPOSÉ DÉTAILLÉ DE MODES DE RÉALISATION PRÉFÉRÉS

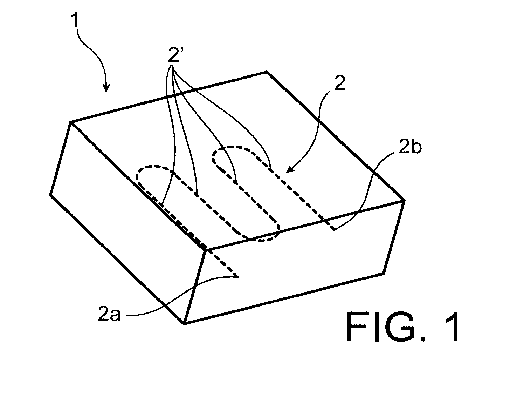

En référence à la figure 1, on peut voir un module 1 pour système d'échangeur de chaleur, de préférence du type échangeur de chaleur à plaques, par exemple prévu pour extraire la chaleur produite par un réacteur nucléaire.

Typiquement, ce module présente une longueur de l'ordre de 10 à 30 cm, une largeur de l'ordre de 10 à 15 cm, et une épaisseur de l'ordre de 1 à 5 cm. Cependant, tout type de dimensionnement est envisageable, et fonction de l'application du système.

Le module 1, dont le procédé de fabrication spécifique à la présente invention sera décrit ci-après, présente une forme sensiblement parallélépipédique, ou de plaque, traversée par un ou une pluralité de canaux 2 de circulation de fluide. Dans l'exemple représenté, il est prévu un unique canal 2 présentant une entrée 2a et une sortie 2b, entre lesquelles se trouvent une pluralité de tronçons de canal 2' de préférence parallèles entre-eux. Les tronçons 2' sont raccordés deux à deux au niveau de leurs extrémités en regard. Les tronçons de canal 2' peuvent être sensiblement rectilignes comme cela a été représenté de façon schématique par les pointillés de la figure 1, ou encore adopter toute autre forme réputée appropriée, telle que la forme dite cintrée ou en zigzag. En outre, la section de ces canaux 2 peut également être adaptée en fonction des besoins rencontrés. A titre d'exemple indicatif, elle peut être carrée, rectangulaire, ou bien encore de forme évolutive afin de créer un canal « 3D ».

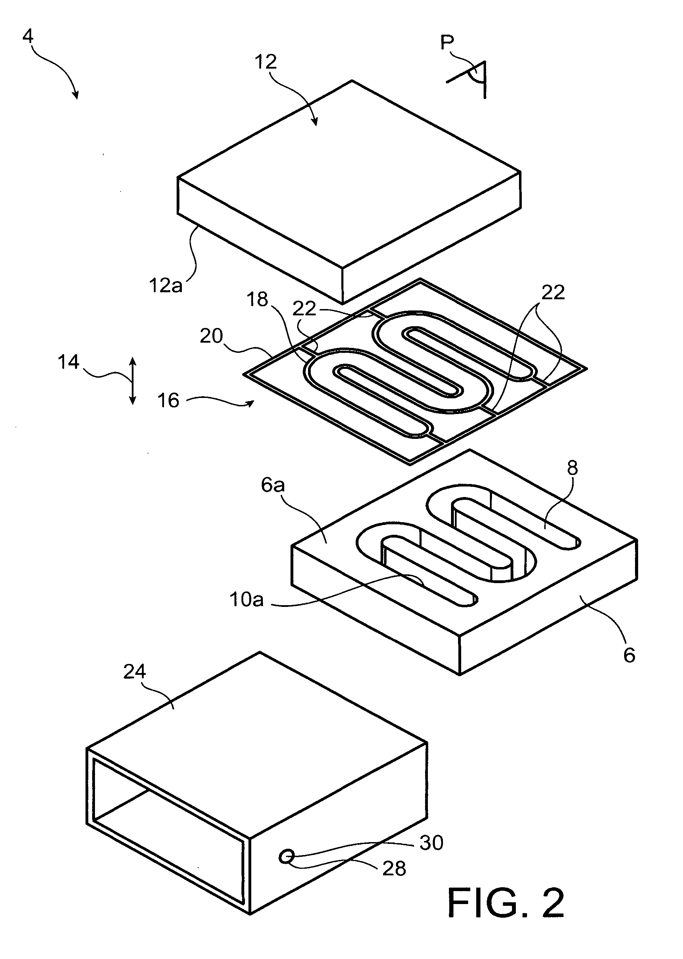

Pour procéder à la fabrication de ce module 1, il est tout d'abord réalisé un ensemble d'éléments empilés, cet ensemble étant référencé de manière générale par la référence 4 sur la figure 2.

L'empilement peut s'effectuer sur un support classique, de préférence horizontal, sur lequel il est tout d'abord placé une plaque métallique évidée 6, de préférence réalisée en acier austénitique inoxydable X2CrNiMo17-12-2. La plaque 6 présente un évidement 8 débouchant au niveau de sa face supérieure 6a, cet évidement 8 formant la totalité du canal 2. Pour obtenir cet évidement non traversant 8, qui définit sur la face 6a un contour d'évidement 10a ou contour de canal, il est de préférence réalisé un usinage classique, par exemple par fraisage.

Dans l'exemple montré, la section de chaque tronçon de canal est sensiblement carrée, de côté mesurant environ 10 mm, sur une plaque évidée 6 également sensiblement carrée, de 10 cm de côté et de 25 mm d'épaisseur.

L'ensemble 4 comporte également une plaque supérieure 12, dite pleine ou non évidée, de préférence aussi réalisée en acier austénitique inoxydable X2CrNiMo17-12-2, en étant également sensiblement carrée de 10 cm de côté et de 15 mm d'épaisseur.

Ces deux plaques 6, 12 sont superposées selon une direction d'empilement 14 sensiblement orthogonale aux plaques, qui sont donc préférentiellement planes, mais qui peuvent alternativement être légèrement courbes.

La plaque supérieure 12 a donc pour fonction d'obturer vers le haut, à l'aide de sa face inférieure plane 12a, l'évidement 8 de la plaque 6 formant canal.

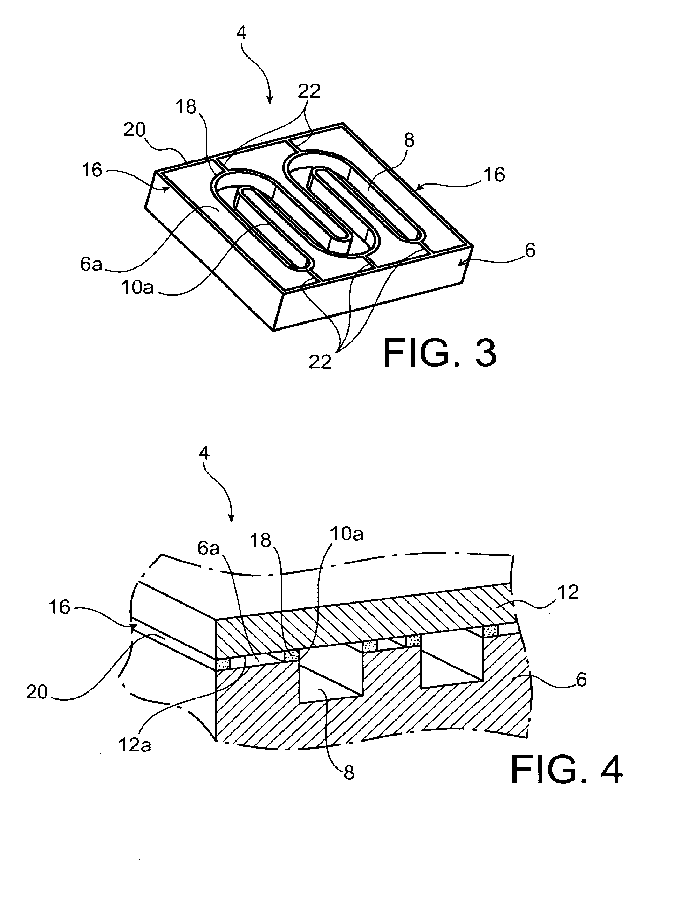

Une des particularités de la présente invention réside dans l'implantation, dans l'ensemble 4 entre les deux plaques 6, 12, d'un insert 16 qui intègre un cordon de matière 18 longeant le contour d'évidement 10a, c'est-à-dire prolongeant sa surface latérale en étant en saillie de la face 6a, comme cela est le mieux visible sur la figure 3. Le cordon de matière 18 définit donc une ligne fermée, de section transversale rectangulaire présentant une hauteur de l'ordre de 0,3 mm, et une largeur de l'ordre de 1 mm. Ici aussi, le cordon est de préférence réalisé en acier austénitique inoxydable X2CrNiMo17-12-2, même si un matériau différent de celui adopté pour les plaques 6, 12 pourrait être retenu, sans sortir du cadre de l'invention. Parmi ces matériaux propices au soudage par diffusion, il s'agit par exemple des aciers, des alliages de nickel, de cuivre, de titane, de zirconium, d'aluminium et des matériaux réfractaires. Il est noté que ce même type de matériau peut être utilisé pour la réalisation des plaques 6, 12.

Dans l'ensemble 4, l'interposition du cordon 18 entre les plaques 6, 12 crée donc un jeu entre leurs faces 6a, 12a en regard, la grandeur de ce jeu correspondant à la hauteur du cordon 18.

Dans le mode de réalisation préféré décrit, l'insert 16 comporte également un cordon périphérique de matière 20 interposé entre les deux plaques 6, 12, et longeant leur périphérie comme cela est visible sur les figures 3 et 4. Ce cordon 20 prend alors la forme d'une ligne fermée carrée, de section préférentiellement identique à celle du cordon 18, et de même matériau. Pour relier les deux cordons 18, 20 entre eux, il est prévu des cordons de jonction 22, de préférence droits, agencés à des endroits où l'écartement entre les deux cordons 18, 20 est le plus faible. La même section et le même matériau sont également retenus pour ces cordons de jonction 22.

L'insert 16 peut être réalisé par usinage ou découpe, de préférence à partir d'une tôle mince, de préférence par découpe au moyen d'un jet d'eau ou d'un laser.

En projection orthogonale selon la direction d'empilement 14, la surface de la face 6a de la plaque 6 est très sensiblement supérieure à la surface de l'insert, un rapport R de l'ordre de 3 à 7 pouvant être retenu. Ce rapport est bien entendu identique à celui entre une section de la partie en relief de la plaque 6 se terminant par la face 6a, et la section de l'insert 16, respectivement dans des plans orthogonaux à la direction d'empilement 14.

Dans le mode de réalisation préféré, la section de la partie en relief de la plaque 6, c'est-à-dire la partie rainurée qui définit l'évidement 8, selon un plan orthogonal à la direction d'empilement 14, représente 72% de la section de la partie pleine de cette plaque 6, également selon un plan orthogonal à la direction d'empilement 14.

Parallèlement, la section de l'insert 16 selon un plan orthogonal à la direction d'empilement 14 représente 12,4% de la section de la partie pleine de la plaque 6 également selon un plan orthogonal à la direction d'empilement 14, cette dernière section correspondant à la section apparente de l'insert.

Ainsi, le rapport R mentionné ci-dessus est ici de l'ordre de 5,8.

La réalisation de l'ensemble 4 est poursuivie en faisant glisser l'empilement de plaques dans une enveloppe étanche 24, qui est ensuite obturée à ses extrémités, toujours de manière étanche. Cette enveloppe, également dénommée conteneur, présente alors un espace intérieur de forme complémentaire de celle de l'empilement. Cette technique est notamment préférée lorsque le module désiré comprend plusieurs étages de circulation fluidique (cas non représenté), à savoir plusieurs canaux superposés selon la direction d'empilement des plaques, obtenus par l'empilement de plaques 6, 12.

Néanmoins, une alternative de réalisation consiste à souder les deux plaques 6, 12 l'une sur l'autre à leur périphérie, de préférence par soudage TIG, afin de former une enveloppe étanche renfermant le canal 2 formant zone creuse.

La réalisation du module 1 est poursuivie en traitant l'ensemble 4, par compression isostatique à chaud. Avant la compression, un dégazage de l'ensemble est effectué, par pompage via un orifice 28 pratiqué dans l'enveloppe 24, ici dans l'une des parois latérales, comme montré sur la figure 2. Une fois le dégazage achevé, l'orifice 28 est obturé de manière étanche, par un bouchon 30, afin d'obtenir l'étanchéité du canal / évidement 8 vis-à-vis de l'extérieur de l'ensemble 4.

La compression de l'ensemble 4 s'opère dans une enceinte appropriée (non représentée), par l'application de conditions de température et de pression qui vont maintenant être détaillées.

Il est opéré une montée en pression et en température de manière à ce que celles-ci atteignent respectivement les valeurs P1 et T1, par exemple respectivement fixées à 6 MPa et 1000°C. Le traitement est appliqué pendant une durée de l'ordre de 2 heures, durant lesquelles la contrainte de compression s'exerçant dans la partie en relief de la plaque 6 est d'environ 6/0,72 MPa, soit environ 8,3 MPa, et la contrainte de compression s'exerçant dans l'insert 16 est d'environ 6/0,124 MPa, soit environ 48,3 MPa, c'est-à-dire 5,8 fois plus importante.

Les cordons 18, 20, 22 ont donc tendance à se déformer plastiquement durant le traitement à faible pression, et se soudent par diffusion sur les plaques 6, 12 entre lesquelles ils sont situés, au niveau des faces 6a, 12a. Pendant le soudage par diffusion de ces cordons qui s'écrasent selon la direction d'empilement, la contrainte appliquée aux plaques 6, 12 n'est pas suffisante pour entraîner leur déformation, de sorte que la géométrie de l'évidement 8 reste conservée. De plus, au fur et à mesure que les cordons s'écrasent en se déformant plastiquement, leur section selon un plan orthogonal à la direction d'empilement s'agrandit, et la contrainte de compression diminue d'autant jusqu'à ce que les cordons arrêtent de se déformer. Un arrêt de la compression isostatique à chaud peut également être envisagé pour terminer l'étape de traitement.

Le soudage observé durant cette étape de traitement est donc suffisant pour obtenir l'étanchéité des interfaces de l'insert, mais présente une résistance mécanique faible, prévue pour être consolidée par la mise en oeuvre d'une étape de consolidation ultérieure, toujours par compression isostatique à chaud. Ici, les interfaces précitées sont bien entendu les surfaces de contact entre les cordons 18, 20, 22 et les faces 6a, 12a des plaques 6 et 12.

Une étape intermédiaire consiste à percer l'ensemble 4 traité, afin de rendre communiquant l'évidement 8 formant canal, avec l'extérieur de cet ensemble. De préférence, cette communication est réalisée par perçage à travers l'une et/ou l'autre de des plaques 6, 12, en regard du canal 8, de façon orthogonale à l'empilement. Cette étape peut s'effectuer à l'aide de toute technique réputée appropriée.

L'étape de consolidation est alors réalisée suite à une montée en température et en pression, respectivement à une valeur T2 de l'ordre de 1100°C, et une valeur P2 de l'ordre de 120 MPa. Cette étape dure environ 3 heures, durant lesquelles la pression appliquée est donc beaucoup importante que durant l'étape de traitement. Cela est propice à l'obtention d'une résistance mécanique forte au niveau des interfaces soudées par diffusion, c'est-à-dire au niveau des faces 6a et 10a. De plus, du fait que l'intérieur de l'évidement 8 est ici soumis à la même pression que celle s'appliquant sur les surfaces extérieures de l'ensemble subissant la compression, l'ensemble 4 ne s'affaisse pas.

Il est alors obtenu le module 1, dit monolithique, correspondant à un bloc massif, par exemple multi-matériaux, traversé par un canal de circulation de fluide 2.

Avant l'utilisation du module 1, un ou plusieurs usinages sont réalisés afin de permettre une entrée/sortie du fluide dans le canal du module.

Lors de l'utilisation du module dans un système d'échangeur thermique, le fluide est par exemple amené par un collecteur d'admission (non représenté) placé à l'entrée 2a du canal 2. Le fluide circule ensuite en serpentant dans le canal 2, avant de s'échapper de ce dernier par la sortie 2b, et de pénétrer par exemple dans un collecteur d'échappement (non représenté) du système.

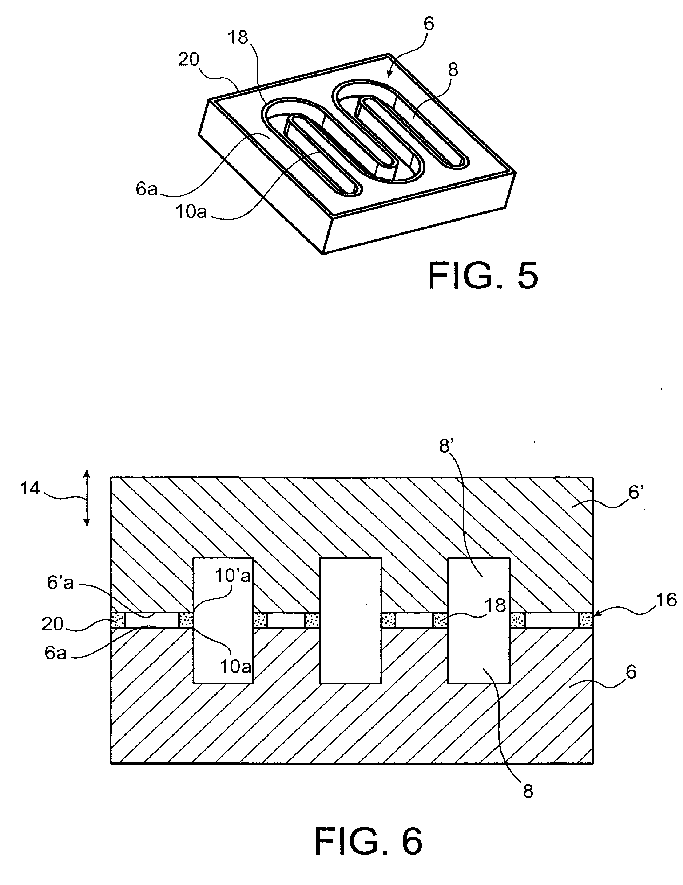

En référence à présent à la figure 5, on peut voir une alternative de réalisation dans laquelle la plaque évidée 6 de l'ensemble intègre avec elle, d'un seul tenant, le cordon périphérique 20 et le cordon de matière 18 longeant le contour d'évidement 10a. Ainsi, ces deux cordons 18, 20 font saillie de la face supérieure 6a de la plaque évidée, en prenant la forme d'un bourrelet de section sensiblement identique à celle décrite pour les cordons de l'insert du mode de réalisation précédent. Ainsi, cet insert n'est plus nécessaire dans l'ensemble empilé, et les cordons 18, 20 sont prévus pour contacter seulement, avec leur partie supérieure, la face inférieure 12a de la plaque pleine 12 (non représentée sur la figure 5). Par conséquent, durant l'étape de traitement, le soudage des cordons 18, 20 s'effectue uniquement sur cette même face inférieure 12a de la plaque pleine 12, toujours dans le but d'obtenir des liaisons étanches entre les deux plaques 6, 12, au niveau des cordons.

La figure 6 montre un mode de réalisation différent pour l'ensemble 4, dans lequel la plaque supérieure de l'empilement est remplacée par une plaque évidée 6', de forme identique ou similaire à celle de la plaque évidée 6 inférieure, qui, elle, est conservée. La plaque évidée 6' est néanmoins retournée de manière à ce que son évidement 8' débouchant au niveau de sa face inférieure 6'a soit en regard de l'évidement 8, les deux évidements 8, 8' se prolongeant l'un l'autre formant conjointement le canal à obtenir.

D'ailleurs, dans la direction d'empilement 14, le contour d'évidement 10'a sur la face 6'a et le contour d'évidement 10a sur la face 6a sont confondus, et chacun prolongé par le cordon 18 de l'insert 16 interposé entre les deux plaques 6, 6'.

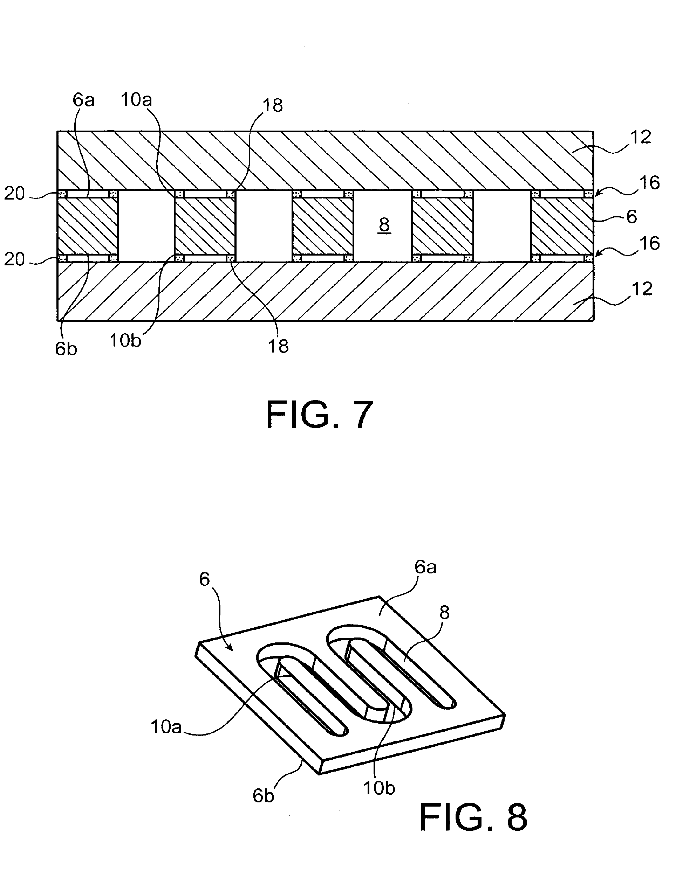

Enfin, dans un mode de réalisation représenté sur les figures 7 et 8, la plaque évidée 6 présente un évidement traversant 8, qui débouche donc à la fois au niveau de sa surface supérieure 6a et de sa surface inférieure 6b, pour définir respectivement un contour d'évidement 10a et un contour d'évidement 10b. L'évidement 8, destiné à former l'intégralité du canal, est obturé en partie supérieure par la plaque pleine supérieure 12, identique à celle décrite précédemment, et obturé en partie inférieure par une plaque pleine inférieure 12, identique à la plaque pleine supérieure.

Ici aussi, il est interposé un insert 16 entre la plaque évidée 6, de préférence réalisée par découpe laser, et chacune des plaques pleines 12.

Dans les modes de réalisation des figures 6 à 8, la solution d'insert peut naturellement être remplacée par une solution à cordons intégrés avec les plaques évidées, tel que cela a été présenté en référence à la figure 5.

Bien entendu, diverses modifications peuvent être apportées par l'homme du métier à l'invention qui vient d'être décrite, uniquement à titre d'exemples non limitatifs.

## Revendications

1. Procédé de fabrication d'un module (1) à zone creuse (2), comprenant :
- une étape de réalisation d'un ensemble (4) comprenant des plaques superposées selon une direction d'empilement (14) et définissant la zone creuse, parmi lesquels au moins une plaque évidée (6) présentant un évidement (8) formant tout ou partie de la zone creuse et débouchant au niveau d'au moins l'une de ses faces (6a) en définissant sur celle-ci un contour d'évidement (10a), ledit ensemble comportant, entre chaque face définissant un contour d'évidement et la plaque (12) de l'ensemble directement consécutive dans la direction d'empilement, un cordon de matière (18) suivant ledit contour d'évidement (10a) ;
- une étape de traitement de l'ensemble (4) visant à obtenir une liaison étanche des deux plaques (6, 12) entre lesquelles le cordon de matière est agencé ; et
- une étape de consolidation de l'ensemble par compression isostatique à chaud, réalisée de manière à obtenir un soudage par diffusion de ses éléments, ladite étape de consolidation étant mise en oeuvre en permettant au gaz de pressurisation de pénétrer dans ladite zone creuse (2), **caractérisé en ce que** l'étape de traitement de l'ensemble (4) résulte en un soudage par diffusion de chaque cordon de matière (18) sur les plaques (6, 12) de l'ensemble qu'il contacte, afin qu'il constitue ladite liaison étanche le long de son contour d'évidement associé (10a).

2. Procédé selon la revendication 1, dans lequel chaque cordon de matière (18) est prévu d'un seul tenant avec sa plaque évidée associée (6), ou rapporté dans l'ensemble en tant qu'insert (16).

3. Procédé selon la revendication 1 ou la revendication 2, dans lequel au moins une plaque évidée (6) de l'ensemble présente un évidement (8) formant tout ou partie de la zone creuse et débouchant seulement au niveau de l'une de ses faces (6a) en définissant sur celle-ci un contour d'évidement (10a).

4. Procédé selon la revendication 3, dans lequel le cordon de matière (18) associé à la plaque évidée (6) définissant un évidement (8) débouchant seulement au niveau de l'une de ses faces (6a), coopère avec une plaque pleine (12) ou avec une autre plaque évidée (6') de l'ensemble.

5. Procédé selon la revendication 1 ou la revendication 2, dans lequel au moins une plaque évidée (6) de l'ensemble présente un évidement (8) formant tout ou partie de la zone creuse et débouchant au niveau de ses deux faces opposées (6a, 6b), cet évidement traversant (8) définissant sur chacune des deux faces opposées de la plaque un contour d'évidement (10a, 10b).

6. Procédé selon la revendication 5, dans lequel chacun des deux cordons de matière (18) associés à la plaque évidée (6) définissant un évidement traversant (8), coopère avec une plaque pleine (12) ou avec une autre plaque évidée (6') de l'ensemble.

7. Procédé selon l'une quelconque des revendications précédentes, dans lequel ladite étape de traitement de l'ensemble est également réalisée par compression isostatique à chaud, à une pression inférieure à celle mise en oeuvre pour ladite étape de consolidation.

8. Procédé selon la revendication 7, dans lequel ladite étape de traitement de l'ensemble réalisée par compression isostatique à chaud est suivie d'une étape de perçage de l'ensemble (4), mise en oeuvre de manière à faire communiquer l'évidement (8) avec l'extérieur de l'ensemble (4).

9. Procédé selon l'une quelconque des revendications précédentes, dans lequel l'ensemble est réalisé de telle sorte qu'avant son étape de traitement, en projection orthogonale selon la direction d'empilement (14), la surface de la face (6a) de la plaque (6) présentant l'évidement (8) est au moins N fois supérieure à la surface de son cordon de matière associé (18), N étant supérieur à 1,5, et de préférence supérieur à 3.

10. Procédé selon l'une quelconque des revendications précédentes, dans lequel ledit ensemble comporte également, entre chaque face (6a) de plaque évidée (6) définissant un contour d'évidement (10a), et la plaque (12) de l'ensemble directement consécutive dans la direction d'empilement, un cordon périphérique de matière (20) suivant la périphérie de ces deux plaques (6, 12), l'étape ultérieure de traitement de l'ensemble visant également à obtenir un soudage par diffusion de chaque cordon périphérique de matière (20) sur les plaques (6, 20) de l'ensemble qu'il contacte, afin qu'il constitue, le long de la périphérie de celles-ci, une liaison étanche des deux plaques (6, 20) entre lesquelles il est agencé.

11. Procédé selon l'une quelconque des revendications précédentes, dans lequel ladite zone creuse prend la forme d'un ou d'une pluralité de canaux de circulation de fluide (2).

12. Procédé selon l'une quelconque des revendications précédentes, dans lequel ledit module (1) est prévu pour équiper un système d'échangeur de chaleur

13. Procédé selon l'une quelconque des revendications précédentes, dans lequel ledit module (1) prend la forme d'une plaque.

## Patentansprüche

1. Verfahren zur Herstellung eines Moduls (1) mit einer hohlen Zone (2), umfassend:
- einen Schritt der Herstellung einer Anordnung (4), umfassend Platten, die entlang einer Stapelungsrichtung (14) überlagert sind und die hohle Zone definieren, darunter wenigstens eine ausgehöhlte Platte (6), die eine Aushöhlung (8) aufweist, welche die gesamte oder einen Teil der hohlen Zone bildet und im Bereich wenigstens einer ihrer Flächen (6a) mündet, wodurch auf dieser eine Aushöhlungskontur (10a) definiert wird, wobei die Anordnung zwischen jeder Fläche, die eine Aushöhlungskontur definiert, und der Platte (12) der Anordnung, die direkt in der Stapelungsrichtung folgt, einen Materialgurt (18) umfaßt, der der Aushöhlungskontur (10a) folgt;
- einen Schritt der Behandlung der Anordnung (4), der darauf abzielt, eine dichte Verbindung der zwei Platten (6, 12) zu erzielen, zwischen denen der Materialgurt angeordnet ist; und
- einen Schritt der Konsolidierung der Anordnung durch isostatische Heißkompression, die derart realisiert wird, dass eine Verschweißung durch Diffusion ihrer Elemente erzielt wird, wobei der Schritt der Konsolidierung derart durchgeführt wird, dass man dem Druckgas ermöglicht, in die hohle Zone (2) einzudringen, **dadurch gekennzeichnet, dass** der Schritt der Behandlung der Anordnung (4) in einer Verschweißung durch Diffusion jedes Materialgurts (18) auf den Platten (6, 12) der Anordnung resultiert, die er kontaktiert, damit er entlang seiner zugeordneten Aushöhlungskontur (10a) die dichte Verbindung bildet.

2. Verfahren nach Anspruch 1, bei dem jeder Materialgurt (18) einstückig mit seiner zugeordneten ausgehöhlten Platte (6) vorgesehen ist, oder als Einsatzstück (16) in der Anordnung angebracht.

3. Verfahren nach Anspruch 1 oder Anspruch 2, bei dem wenigstens eine ausgehöhlte Platte (6) der Anordnung eine Aushöhlung (8) aufweist, die die gesamte oder einen Teil der hohlen Zone bildet und nur im Bereich einer ihrer Flächen (6a) mündet, wodurch auf dieser eine Aushöhlungskontur (10a) definiert wird.

4. Verfahren nach Anspruch 3, bei dem der Materialgurt (18), der der ausgehöhlten Platte (6) zugeordnet ist, die eine Aushöhlung (8) definiert, welche nur im Bereich einer ihrer Flächen (6a) mündet, mit einer vollen Platte (12) oder mit einer anderen ausgehöhlten Platte (6') der Anordnung zusammenwirkt.

5. Verfahren nach Anspruch 1 oder Anspruch 2, bei dem wenigstens eine ausgehöhlte Platte (6) der Anordnung eine Aushöhlung (8) aufweist, die die gesamte oder einen Teil der hohlen Zone bildet und im Bereich ihrer zwei gegenüberliegenden Flächen (6a, 6b) mündet, wobei diese durchgehende Aushöhlung (8) auf jeder der zwei gegenüberliegenden Flächen der Platte eine Aushöhlungskontur (10a, 10b) definiert.

6. Verfahren nach Anspruch 5, bei dem jeder der zwei Materialgurte (18), die der ausgehöhlten Platte (6) zugeordnet sind, welche eine durchgehende Aushöhlung (8) definiert, mit einer vollen Platte (12) oder mit einer anderen ausgehöhlten Platte (6') der Anordnung zusammenwirkt.

7. Verfahren nach einem der vorhergehenden Ansprüche, bei dem der Schritt der Behandlung der Anordnung ebenfalls durch isostatische Heißkompression bei einem Druck realisiert wird, der kleiner als jener ist, welcher für den Schritt der Konsolidierung verwendet wird.

8. Verfahren nach Anspruch 7, bei dem auf den Schritt der Behandlung der Anordnung, der durch isostatische Heißkompression realisiert wird, ein Schritt des Durchbohrens der Anordnung (4) folgt, der derart durchgeführt wird, dass die Aussparung (8) mit der Außenseite der Anordnung (4) kommuniziert.

9. Verfahren nach einem der vorhergehenden Ansprüche, bei dem die Anordnung derart realisiert ist, dass vor dem Schritt der Behandlung in einer orthogonalen Projektion entlang der Stapelungsrichtung (14) die Oberfläche der Fläche (6a) der Platte (6), die die Aushöhlung (8) aufweist, wenigstens N Mal größer ist als die Oberfläche ihres zugeordneten Materialgurts (18), wobei N größer ist als 1,5 und vorzugsweise größer als 3.

10. Verfahren nach einem der vorhergehenden Ansprüche, bei dem die Anordnung ferner zwischen jeder Fläche (6a) der ausgehöhlten Platte (6), welche eine Aushöhlungskontur (10a) definiert, und der Platte (12) der Anordnung, die direkt in der Stapelungsrichtung folgt, einen Umfangsmaterialgurt (20) umfaßt, der dem Umfang dieser beiden Platten (6, 12) folgt, wobei der spätere Schritt der Behandlung der Anordnung ferner darauf abzielt, eine Verschweißung durch Diffusion jedes Umfangsmaterialgurts (20) auf den Platten (6, 20) der Anordnung zu erzielen, die er kontaktiert, damit er entlang des Umfangs derselben eine dichte Verbindung der zwei Platten (6, 20) bildet, zwischen denen er angeordnet ist.

11. Verfahren nach einem der vorhergehenden Ansprüche, bei dem die hohle Zone die Form eines oder einer Mehrzahl von Fluidzirkulationskanälen (2) aufweist.

12. Verfahren nach einem der vorhergehenden Ansprüche, bei dem das Modul (1) als Ausstattung eines Wärmetauschersystems ausgelegt ist.

13. Verfahren nach einem der vorhergehenden Ansprüche, bei dem das Modul (1) die Form einer Platte aufweist.

## Claims

1. A method for manufacturing a module (1) having a hollow region (2), comprising:
- a step consisting of making an assembly (4) consisting of plates stacked in a stacking direction (14) and defining the hollow region, including at least one recessed plate (6) having a recess (8) constituting all or part of the hollow region and open at at least one of its faces (6a), defining thereon a recess outline (10a), said assembly including, between each face defining a recess outline and the plate (12) of the assembly that is immediately adjacent in the stacking direction, a strand of material (18) lying along said recess outline (10a);
- a step consisting of treating the assembly (4) with the aim of achieving a gas-tight connection of the two plates (6, 12) between which the strand of material is placed; and
- a step consisting of consolidating the assembly by hot isostatic pressing, carried out in such a manner as to achieve diffusion bonding of its elements, said consolidation step being implemented while allowing the pressurization gas to enter said hollow region (2), caracterised in that said step consisting of treating the assembly (4) is a diffusion bond of each strand of material (18) to the plate (s) with which it is in contact, in order to constitute, along its associated recess outline (10a).

2. A method according to Claim 1, wherein each material strand (18) is designed in a single unit with its associated recessed plate (6), or is applied to the assembly as an insert (16).

3. A method according to Claim 1 or Claim 2, wherein at least one recessed plate (6) of the assembly has a recess (8) constituting all or a portion of the hollow region and open only at one of its faces (6a), defining thereon a recess outline (10a).

4. A method according to Claim 3, wherein the strand of material (18), associated with the recessed plate (6) defining a recess (8) opening only at one of its faces (6a), cooperates with a solid plate (12) or with another recessed plate (6') of the assembly.

5. A method according to Claim 1 or Claim 2, wherein at least one recessed plate (6) of the assembly has a recess (8) constituting all or a portion of the hollow region and open at its two opposite faces (6a, 6b), this through recess (8) defining a recess outline (10a, 10b) on each of the two opposite faces of the plate.

6. A method according to Claim 5, wherein each of the two strands of material (18), associated with the recessed plate (6) defining a through recess (8), cooperates with a solid plate (12) or with another recessed plate (6') of the assembly.

7. A method according to any one of the foregoing claims, wherein said assembly treatment step is also carried out by hot isostatic pressing, at a pressure lower than that employed for said consolidation step.

8. A method according to Claim 7, wherein said assembly treatment step carried out by hot isostatic pressing is followed by a step consisting of drilling the assembly (4), implemented so as to cause the recess (8) to communicate with the outside of the assembly (4).

9. A method according to any one of the foregoing claims, wherein the assembly is so constituted that before its treatment step, the area in orthogonal projection in the stacking direction (14) of the face (6a) of the plate (6) having the recess (8) is at least N times greater than the area of its associated strand of material (18), N being greater than 1.5 and preferably greater than 3.

10. A method according to any one of the foregoing claims, wherein said assembly also comprises, between each face (6a) of a recessed plate (6) defining a recess outline (10a) and the plate (12) of the assembly that is immediately adjacent in the stacking direction, a peripheral strand of material (20) lying along the perimeter of these two plates (6, 12), the subsequent assembly treatment step also aiming to obtain diffusion bonding of each peripheral strand of material (20) to the plates (6, 12) of the assembly with which it is in contact, in order to constitute, along their perimeter, a gas-tight connection of the two plates (6, 12) between which it is placed.

11. A method according to any one of the foregoing claims, wherein said hollow region takes the form of one or of a plurality of fluid circulation channels (2).

12. A method according to any one of the foregoing claims, wherein said module (1) is designed to equip a heat exchanger system.

13. A method according to any one of the foregoing claims, wherein said module (1) takes the form of a plate.
